# EUROPEAN PATENT APPLICATION

(11) **EP 0 737 811 A1**
(43) Date of publication of application: **16.10.1996**
(21) Application number: 94903994.5
(22) Date of filing: 24.12.1993
(51) Int. Cl.: F03D 11/04, F03B 7/00

(54) **POWER GENERATION APPARATUS**

(71) Applicant: Maeda, Shigeru, Nishimuro-gun, Wakayama 646-03 (JP)
(72) Inventor: Maeda, Shigeru, Nishimuro-gun, Wakayama 646-03 (JP)
(74) Representative: Hillier, Peter
(86) International application number: JP9301934
(87) International publication number: WO9518303

(57) **Abstract**

To generate electric power by utilizing wind power or hydraulic power, this invention provides a structure which makes it possible to easily install a wind mill or a water wheel. A wind mill is rotatably fitted to a wire spread between valleys, and the revolution of the wind mill is transmitted to a generator fixed to the ground of the slope of a mountain through pulleys and belts fitted to a rotary shaft of the wind mill.

## Description

### TECHNICAL FIELD

The present invention relates to installation and structure of an power generation apparatus driven by wind or water energy.

### BACKGROUND ART

Wind power generation is one of the methods of converting from natural energy to electricity. Conventional wind power generator apparatuses comprise wind turbines which are mounted on towers and driven by wind for generation of electric power.

The speed of wind will be increased at a higher level from the ground. The towers are thus desired to stand higher with safety.

Hydroelectric power generation resides in the generation of electricity by falling water. Conventional hydroelectric generator apparatuses include water turbines driven by flows of falling water controlled with dams or waterways. This requires the construction of a dam or waterway for driving water turbines.

It is known that higher wind turbine towers cost a considerable amount of money and will be installed on remote mountains with much difficulty. Although the wind power generation is preferred for supplying electricity to facilities located on remote mountains where the installation of power lines is rarely economical, its wind towers are not easily built on such locations.

As the construction of dams or waterways is costly and only located under strict conditions, it will not easily be built on remote mountains.

It is an object of the present invention to provide a wind or water turbine located in a geographical depression or valley between hills or mountains for generation of electricity by wind or water running through the valley.

### DISCLOSURE OF THE INVENTION

According to the present invention, a means is provided comprising a wind turbine supported in the air by a wire extending between two anchor bases located on mountains or building structures, a generator mounted on one of the anchor bases for generation of electricity, and a transmission device for transmitting the rotation of the wind turbine to the generator.

Also, it may comprise a water turbine supported by a wire extending between two anchor bases located on river banks, structures in the water, or floats on the water, a generator mounted on one of the anchor bases for generation of electricity, and a transmission device for transmitting the rotation of the water turbine to the generator.

According to the present invention, the wind turbine rotatably supported in the air is driven by wind and its rotation is transmitted by the transmission device to the generator which in turn generates a power of electricity.

The water turbine supported by the wire extending across the anchor bases located on river banks, floats, or structures is rotated by water and its rotation is transmitted to the generator mounted on the float or bank for generation of electricity.

### BRIEF DESCRIPTION OF THE DRAWINGS

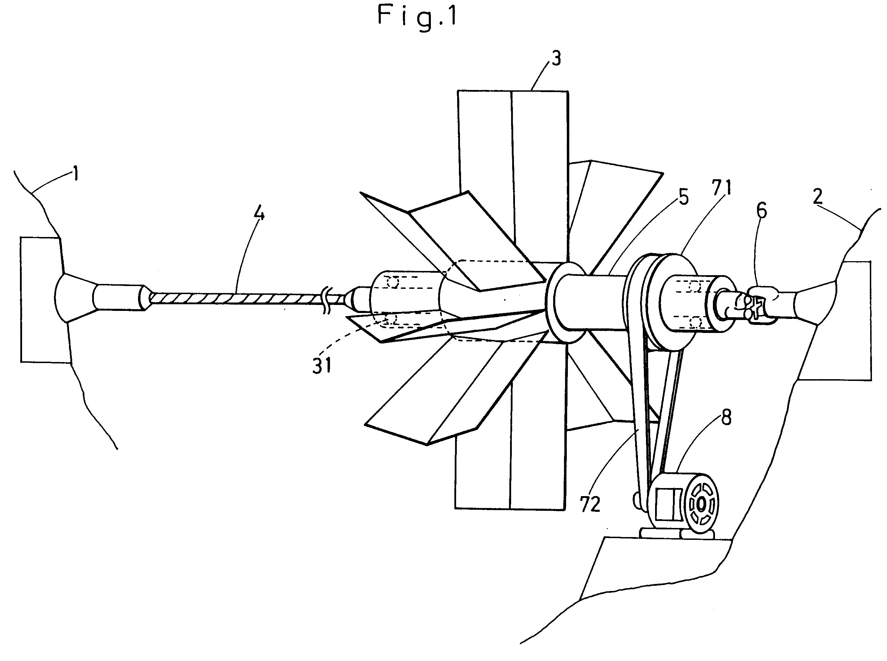

Fig.1 is a view showing a generation apparatus of the present invention mounted to slopes of two opposite mountains which face each other across a valley.

### BEST MODES FOR EMBODYING THE INVENTION

### First Embodiment

An embodiment of a power generation apparatus of the present invention will be described in details.

Fig.1 illustrates a wind turbine 3 being mounted across a valley between two mountain slopes 1 and 2.

A wire 4 is anchored at one end to the slope 1 and joined at the other end to a shaft 5 of the wind turbine 3. The other end of the shaft 5 is anchored by a universal joint 6 to the slope 2.

The wind turbine 3 is mounted by bearings 31 to the shaft 5 for rotating motion.

Blades of the wind turbine 3 have a moderate V shape in cross section for regulating the rotational direction.

The shaft 5 of the wind turbine 3 has a pulley 71 mounted to one end thereof for transmission of the rotation of the wind turbine 3 by a belt 72 to a generator 8 fixedly mounted to a base on the slope 2.

Accordingly, the blow of wind along the valley rotates the wind turbine 3 which in turn drives the generator 8 for generation of electricity.

The apparatus of the present invention produces a power of electricity by wind energy without causing any pollution. As its wind turbine 3 is supported by the wire 4 in the air, the apparatus will be low in the cost of installation providing an economical advantage. While the bulky generator 8 is placed on the slope, the wire 4 is loaded with as a low weight as the wind turbine 3.

The transmission is not limited to the belt 72 but a chain or other device may be used with equal success.

If the generator 8 is small and light weighted, it may be linked directly to the shaft 5.

The apparatus will be installed between building structures as well as mountains. It is also a good idea to install the apparatus on a wire extending between two simple posts arranged on the ground.

### Second Embodiment

Although the first embodiment explains the generation of electricity by wind, running water may be used for the purpose.

In this embodiment, the wind turbine is replaced by a water turbine supported with a wire for rotating motion. The water turbine is driven by running water. The wire is joined between river banks, structures in the water, vessels or floats on the water, or their combination. The generator may be mounted on the bank, structure or float.

As its generator is placed on a float or the like and its wire is anchored to the bank, the hydroelectric generator apparatus will be portable and can readily generate electricity without serious setting.

### APPLICABILITY TO INDUSTRIAL USE

As set forth above, the power generation apparatus of the present invention allows a power of electricity to be generated at a lower cost. Accordingly, the apparatus may be used at a marginal location which is considered not feasible for pollution-free power generation.

Particularly when the apparatus is installed in hills or mountains which are less accessible, the energy of wind will be converted to electricity at higher effectiveness.

Also when the apparatus is installed at seaside or riverside, the energy of water will be converted to electricity.

## Claims

1. Power generation apparatus comprising a wind turbine supported in the air by a wire extending between two anchor bases located on mountains or building structures, a generator mounted on one of the anchor bases for generation of electricity, and a transmission device for transmitting the rotation of the wind turbine to the generator.

2. Power generation apparatus comprising a water turbine supported by a wire extending between two anchor bases located on river banks, structures in the water, or floats on the water, a generator mounted on one of the anchor bases for generation of electricity, and a transmission device for transmitting the rotation of the water turbine to the generator.
